# EUROPEAN PATENT APPLICATION

(11) **EP 4 579 370 A1**
(43) Date of publication of application: **02.07.2025**
(21) Application number: 24461607.4
(22) Date of filing: 31.07.2024
(51) Int. Cl.: G05D 1/622, G05D 101/15, G05D 105/28, G05D 107/70, G05D 109/10, G05D 1/224

(54) **A CONTINUOUS RISK ASSESSMENT SYSTEM AND METHOD FOR MOBILE ROBOTS**

(71) Applicant: Inovatica AGV Sp.z o.o., 90-437 Lodz (PL)
(72) Inventor: ZIEBA, Bogumil Jerzy, 90-437 Lodz (PL); Mlynarczyk, Wojciech, 90-437 Lodz (PL)
(74) Representative: Kancelaria Eupatent.pl Sp. z.o.o

(57) **Abstract**

A continuous risk assessment system for mobile robots (10), the system comprising: at least one robot monitor (100), configured to monitor the environment of the mobile robot (10) and send sensor data representative of the robot's environment to a computing server (300), the robot monitor (100) comprising a central processing unit (107) configured to receive sensor data from at least one sensor (101-106) installed on the robot (10); the computing server (300), configured to collect and store sensor data received from the at least one robot monitor (100) and to perform the robot's operation risk assessment by means of an artificial intelligence (AI) data processing module (303) trained based on historical data of the robot's operation to generate hazard information relevant to safety guidelines; the user interface module (200) configured to provide a graphical user interface (GUI) for user interaction with the system, allowing input of the safety guidelines and presenting the hazard information.

## Description

### TECHNICAL FIELD

The invention pertains to an expert system and method for performing continuous risk assessment of mobile robots in their working environment using artificial intelligence (AI) technology.

### BACKGROUND

Mobile robots, also known as autonomous mobile robots (AMRs) or automated guided vehicles (AGVs), are industrial devices capable of moving and performing tasks in various environments without direct human control. These robots are widely used in applications such as warehouse logistics, where they transport and move goods, thereby eliminating the need for manual handling.

The deployment and use of mobile robots fall under the responsibility of the end user, typically organizations in the manufacturing or logistics sectors. Operating these robots in human working environments shifts the responsibility for safety to the employer. Therefore, ensuring the safe operation of mobile robots is critical for the safety of human workers and the overall responsibility of the company deploying such robots.

Currently, there are no binding legal standards specifically governing the use of mobile robots, unlike traffic laws for cars. However, several industrial guidelines and standards, such as EN/ISO 3691-4:2023 and ANSI/RIA 15.08, provide key recommendations for ensuring the safety of mobile robot systems. These standards cover the design, production, and implementation phases to ensure safe operation. Given the complexity and multiplicity of these standards, end-users must possess extensive knowledge and expertise in mobile robot safety systems.

Additionally, Council Directive 2009/104/EC regulates the minimum requirements for the safety and health protection of workers using work equipment, including mobile robots. Employers are mandated to conduct detailed risk assessments based on their specific operating conditions, installation requirements, and working environments.

Despite the availability of guidelines, the responsibility lies with the end-user to select and ensure the safe operation of suitable robots, especially in areas with human activity. While it is common to employ external experts for risk analysis, continuous risk assessment is crucial due to the dynamic nature of robot operating conditions, which can introduce new risks in real-time. Without continuous risk analysis, there is a heightened risk of security incidents that could endanger personnel and infrastructure.

### SUMMARY OF THE INVENTION

The present invention addresses the technical problem of ensuring the safe operation of mobile robots in dynamic and potentially hazardous environments. Traditional risk assessment methods are often static and periodic, failing to account for real-time changes in the operating conditions of mobile robots. This invention leverages artificial intelligence (AI) to provide continuous, real-time risk assessment, thereby enhancing the safety and operational efficiency of mobile robots.

The present invention solves at least some of the problems outlined above by providing a continuous risk assessment system and method for mobile robots using artificial intelligence (AI) technology. This system provides a decision-making tool in the risk assessment of a mobile robot.

Based on the operating environment and robot characteristics, the system calculates the risks of operating the robot, which is the result of the relationship between a potential safety incident, e.g., an accident involving a mobile robot, and the safety measures applied according to the recommendations of the relevant standard, e.g., EN/ISO 3691-4:2023. The system according to the present invention provides companies deploying mobile robots with an effective tool for real-time monitoring and risk management, enabling a rapid response to changing conditions and minimizing the risk of incidents, ensuring a safe working environment for personnel and equipment.

To improve the safety of mobile robots, the proposed system uses artificial intelligence (AI) technology to learn and calculate the risk assessment of a mobile robot. The system can predict hazardous situations based on the analysis of sensor data and past experiences collected from a large dataset in cloud computing.

The system may generate a set of recommendations in the form of technical and organizational protection measures, such as: physical separation of vehicle traffic, use of vehicle speed limiters, use of laser scanners to detect the presence of people, and automatic stopping of vehicle traffic in narrow areas to minimize mobile robot operation.

The important features and advantages of the invention include the following.

Integration of AI for real-time risk assessment: the system integrates artificial intelligence (AI) technology for real-time risk assessment of mobile robots' operations. By utilizing AI, the system can analyze data from environment monitoring components, predict potential risks, and generate recommendations for safety measures. This approach is innovative as it enables proactive risk management and enhances safety in dynamic work environments where conditions may change rapidly.

Comprehensive monitoring and data analysis: unlike traditional risk assessment methods that rely on periodic evaluations, this system continuously monitors the environment and analyzes data using AI algorithms. This continuous monitoring allows for the identification of emerging risks and enables prompt intervention to mitigate them. The system's ability to provide real-time risk assessment based on up-to-date data sets it apart from conventional approaches and enhances safety in environments where mobile robots operate alongside human workers.

Cloud computing for data management and analysis: by leveraging cloud computing technology, the system can efficiently collect, store, and analyze vast amounts of data generated by environment monitoring components. This cloud-based approach enables seamless scalability and facilitates collaborative risk management efforts across multiple locations or organizations.

Adaptability and continuous improvement: the system's AI capabilities enable it to adapt to changing environmental conditions and operational requirements. Through machine learning algorithms, the system can continuously improve its risk assessment models based on feedback from past experiences and interactions with the environment. This adaptability ensures that the system remains effective and relevant over time, even as work environments evolve and new challenges arise.

The main components of the intelligent system are a robot monitor, a user interface and a computing server.

The robot monitor is configured to monitor the environment of the mobile robot and send information about the robot's environment to a computing server. The information scope of the monitoring includes: speed of the robot, distances to obstacles (where, according to the standard, there are limits to the speed of the robot depending on the distance to obstacles), detection of people and other vehicles causing potential dangerous situations, inclination of the robot's movement, shocks of the robot - potential crossings of expansion joints and bumps, monitoring of pick-up, carriage, and put-down of goods. The robot monitor contains hardware elements in the form of one or more components installed on the mobile robot. Further, the robot monitor includes software elements that perform telemetry functions, identifying and tracking objects in the robot's environment through the application of artificial intelligence technology. The software of the monitoring component must process data in real-time, preferably with a processing time of no more than 2 seconds to allow for rapid response to changing environmental conditions. It should provide minimal false alarms (preferably, less than 2%) and missing objects (preferably, less than 3%) to ensure effective monitoring of the robot's environment with minimal risk of data misinterpretation. Data transmitted between the robot and the computing server should be encrypted to ensure the confidentiality and integrity of the information to avoid potential risks of unauthorized access or data manipulation. Data from the robot monitor is sent to the computing server.

The user interface (UI) functions as a user environment that allows interaction with the system using a graphical user interface (GUI) with elements such as icons, buttons, windows, and menus, instead of text commands. Two types of user interaction are implemented using the tool. The first includes data input by the mobile robot user, such as: information about the environment in which the mobile robots are moving, relevant to the risk assessment of the mobile robot, input of the mobile robot's movement zones according to the relevant standard, such as EN/ISO 3691-4:2023, i.e.: operational, restricted, confined, load transfer, public, marking of technical protection measures: barriers, horizontal/vertical markings, safety scanners, etc.; introduction of technical data and characteristics of the safety system of the mobile robot: range of zones monitored by the robot, location of safety buttons, possibility to easily move the robot in manual mode during a dangerous situation. The second includes presentation of a real-time mobile robot risk assessment (based on continuous and up-to-date data). In the event of detection of a potential hazard or risk beyond the acceptable, the system will automatically generate an alarm and notify the relevant persons or safety management systems. In addition, it will enable rapid response to changing conditions and make necessary adjustments to minimize risks. This tool is used for data entry and display, wherein all calculations are performed by the computing server.

The computing server is configured to collect and store monitoring data sent from the robot monitors. It acts as a central platform to which information from the monitoring components of the robot monitors is transferred. It is further configured to perform a risk analysis of the movement of mobile robots, and provide recommendations for measures to protect mobile robots. In order to assess the risk of mobile robot movement, the server uses artificial intelligence technology to learn robot movements and interactions with the environment. The system can predict dangerous situations based on the analysis of sensor data and past experiences from other robots as well. In addition, it can generate a set of recommendations in the form of technical protection measures, such as the physical separation of vehicle traffic, the use of vehicle speed limiters, the use of laser scanners to detect the presence of people, and the automatic stopping of vehicle traffic in narrow corridors.

By integrating the above components, the system of the present invention enables continuous assessment and management of risk in real-time, providing users with an effective tool to monitor and ensure the safety of mobile robots in their working environments.

The risk assessment system of the present invention can operate independently of robot safety mechanisms implemented onboard the robots. For example, a robot can have a built-in safety mechanism that monitors its distance from neighboring obstacles and stops the movement of the robot in case the distance to the obstacle is smaller than a predefined threshold, in order to avoid collision. The risk assessment system of the present invention does not need to be integrated with such safety mechanisms and it can operate independently thereof. The risk assessment system can share the sensor hardware with the robot's safety mechanisms, such as distance sensors, or use dedicated sensors. The risk assessment system performs an independent analysis of the sensor data and presents its independent assessment of the robot's operation that is generated depending on the user requirements (which are typically based on specific industrial guidelines or standards). Based on the results of this analysis, the user receives an overview of the operation of the robot and can use the analysis to remodel the operation of the robot within the environment, for example by changing its paths of movement, timing of performing certain activities, etc.

The results of the risk assessment can be used to manually reorganize the operation of the robots, or can be fed to a facility automation system (such as a fleet management system) for further processing such that the facility automation system adapts the operation of the robots to reduce the risk factors indicated in the risk assessment. This can be seen as a feedback loop mechanism, wherein there is a closed loop of monitoring of robots' operation, generating risk assessment, and rearranging operation of the robots, aimed to minimize the risks (while keeping other factors, such as operation efficiency, within specified limits).

The continuous risk assessment system and method for mobile robots are applicable in various industrial sectors, including manufacturing, logistics, and warehousing. The system enhances the safety and efficiency of mobile robot operations, making it particularly useful in environments where robots operate alongside human workers. By providing real-time risk assessments and recommendations, the system helps organizations comply with safety standards and guidelines, thereby reducing the risk of accidents and improving overall operational safety.

In a particular aspect, there is provided a continuous risk assessment system for mobile robots, the system comprising: at least one robot monitor, configured to monitor the environment of the mobile robot and send sensor data representative of the robot's environment to a computing server, the robot monitor comprising a central processing unit configured to receive sensor data from at least one sensor installed on the robot; the computing server, configured to collect and store sensor data received from the at least one robot monitor and to perform the robot's operation risk assessment by means of an artificial intelligence data processing module trained based on historical data of the robot's operation to generate hazard information relevant to safety guidelines; the user interface module configured to provide a graphical user interface for user interaction with the system, allowing input of the safety guidelines and presenting the hazard information.

The robot monitor may comprise at least: one or more cameras for capturing visual data, one or more laser scanners for measuring distances to obstacles, one or more motion sensors for detecting movement and monitoring speed, one or more inclination sensors for monitoring the angle of the slope, one or more shock sensors for detecting vibrations and shocks, and one or more goods handling sensors for monitoring the pick-up, transport, and put-down processes of goods.

The robot monitor may comprise a telemetry module for processing real-time sensor data from the sensors and a data preprocessing module configured to perform at least one of: normalizing, reducing noise, and filtering the real-time sensor data.

The robot monitor may comprise a data communication module configured to encrypt the sensor data to be transmitted to the computing server.

The computing server may comprise a data collection module for aggregating data from at least one robot monitor and a data storage module for storing the collected data.

The computing server may further comprise a recommendation generation module configured to generate recommendations for safety measures based on the hazard information generated by the AI data processing module.

In another aspect, there is provided a method for continuous risk assessment of mobile robots by means of the system of any of the previous claims, the method comprising: monitoring the environment of at least one mobile robot using the robot monitor with hardware and software elements, collecting and storing monitoring data from the robot monitor on the computing server, performing risk analysis by means of the AI data processing module on the computing server to generate hazard information, presenting the hazard information to the user via the user interface module.

The method may further comprise generating, by means of the recommendation generation module, recommendations for safety measures based on the hazard information.

The method may further comprise adapting the operation of the at least one mobile robot based on the recommendations for safety measures.

### BRIEF DESCRIPTION OF FIGURES

The invention is shown by means of example embodiments in a drawing, wherein:
Fig. 1 shows a high-level block diagram of the continuous risk assessment system.
Fig. 2 shows a detailed schematic of the hardware elements of the robot monitor.
Fig. 3 shows a flowchart of the software components of the robot monitor.
Fig. 4 shows a diagram of the computing server architecture.
Fig. 5 shows a sample user interface screen with recommendations generated by the computing server.

### DETAILED DESCRIPTION OF EMBODIMENTS

The following detailed description outlines the best currently contemplated modes of carrying out the invention. This description is not to be taken in a limiting sense but is provided to illustrate the general principles of the invention.

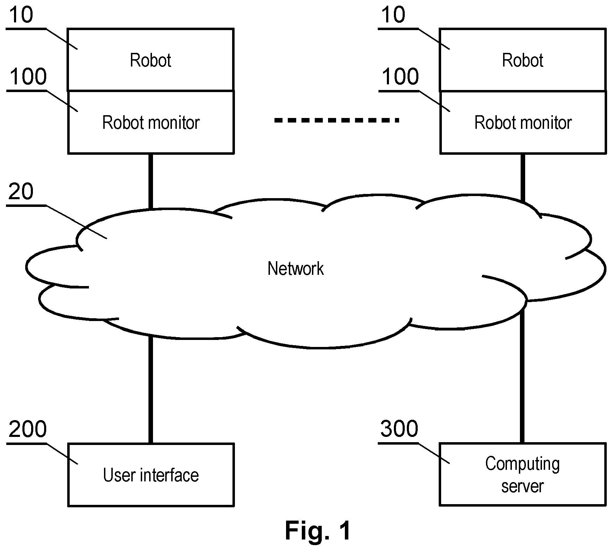

Referring to Fig. 1, a high-level block diagram of the continuous risk assessment system for mobile robots 10 is illustrated. The system comprises three main components: a robot monitor 100, a user interface 200, and a computing server 300, which communicate over a computer network 20.

The robot monitor 100 is responsible for continuously monitoring the environment in which each mobile robot 10 operates. This component includes both hardware and software parts. The hardware part consists of various sensors installed on each mobile robot 10, such as cameras, laser scanners, and motion sensors, which collect real-time data about the robot's surroundings. The software part processes this data to perform telemetry functions, identify and track objects using artificial intelligence (AI) technology, and send the processed information to the computing server 300.

Each mobile robot 10 is associated with a dedicated robot monitor 100, capturing critical parameters such as the speed of the robot, distances to obstacles, detection of people and other vehicles, inclination of the robot's movement, shocks experienced by the robot, and the process of picking up, transporting, and putting down goods. This data is essential for assessing the risk associated with the robot's operation and ensuring compliance with safety standards.

The user interface 200 provides a user-friendly environment for interacting with the continuous risk assessment system via a graphical user interface (GUI). The user interface 200 allows users to input data relevant to the risk assessment, such as information about the environment in which the mobile robots are operating, including types of mobility zones (e.g., operational, restricted, confined, load transfer, public) and technical protection measures (e.g., barriers, horizontal/vertical markings, safety scanners).

Additionally, the user interface 200 enables users to enter detailed technical data and characteristics of the mobile robot's safety system, such as the range of monitored zones, location of safety buttons, and the ability to move the robot in manual mode during a dangerous situation. The user interface 200 also displays real-time risk assessment results, including visual indicators of risk levels and automatic alarm notifications in case of potential hazards.

The user interface 200 can communicate with the robot monitors 100 and the computing server 300 to send configuration and other information entered by the user and receive data to be presented to the user. The user interface 200 can be a dedicated computer installed on premises where the robots operate or an application that can be installed on any computer or mobile device capable of communicating with the computing server 300.

The computing server 300 serves as the central platform for collecting, storing, and analyzing data sent from the robot monitor 100. The server utilizes cloud computing technology to handle vast amounts of data generated by the robot monitors 100 efficiently. The data is encrypted during transmission to ensure confidentiality and integrity.

The computing server 300 performs risk analysis using AI technology, including machine learning algorithms, to learn from historical data and current observations. This analysis allows the system to predict hazardous situations and generate recommendations for safety measures. The recommendations may include physical separation of vehicle traffic, use of vehicle speed limiters, and deployment of advanced laser scanners to detect the presence of people and automatically stop vehicles in narrow corridors.

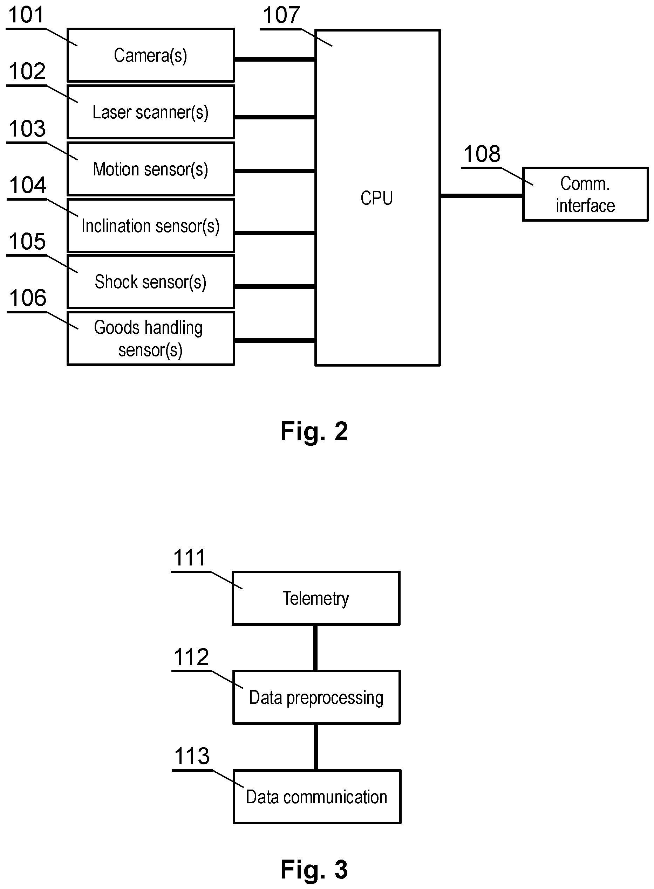

Referring to Fig. 2, a detailed schematic of the hardware part of the robot monitor 100 is illustrated. One or more cameras 101 can be placed around each mobile robot to provide a comprehensive view of its surroundings. These cameras capture real-time visual data, which is used for object identification and tracking. The cameras are positioned to cover blind spots and ensure a 360-degree view around the robot.

Laser scanners 102 can be mounted on the front and rear of each mobile robot. These scanners emit laser beams to measure distances to obstacles and detect the presence of people and other vehicles. The data from the laser scanners is crucial for calculating safe stopping distances and adjusting the robot's speed according to the proximity of obstacles.

Motion sensors 103 can be installed on the sides of each mobile robot to detect movement and monitor the robot's speed. These sensors provide real-time data on the robot's velocity and acceleration, which is used to ensure compliance with safety standards and prevent collisions.

Inclination sensors 104 can be placed on each mobile robot to monitor the angle of the slope on which the robot is operating. These sensors help in adjusting the robot's speed and movement to maintain stability and prevent tipping over on inclined surfaces.

Shock sensors 105 can be integrated into each mobile robot to detect vibrations and shocks experienced during movement. These sensors are essential for identifying potential hazards such as crossing expansion joints or bumps, which could affect the robot's stability and operation.

Goods handling sensors 106 dedicated to monitoring the pick-up, transport, and put-down processes of goods can be installed on each mobile robot. These sensors ensure that the robot handles goods safely and efficiently, minimizing the risk of accidents during material handling operations.

Each sensor 101-106 is connected to the robot's central processing unit (CPU) 107, which processes the data and communicates with the software part of the monitoring component. The CPU 107 ensures that the data is encrypted before transmission to the computing server 300 to maintain confidentiality and integrity.

The robot monitor 100 further contains a communication interface 108 connected with the CPU 107. This interface is responsible for facilitating communication between the mobile robot and the computing server 300. It ensures that the processed data is securely transmitted to the computing server 300 for further analysis and storage. Well-known communication interfaces, preferably wireless, can be used, such as WiFi, GSM, or any interface suitable for operation in the robot's environment.

The type and number of sensors 101-106 installed on a specific robot can be selected depending on the type of the robot, the type of operations performed, and requirements of industrial safety standards or guidelines. It is important that at least one dedicated or robot's own sensor 101-106 is used for monitoring the robot's operation. The data collected by these sensors is transmitted to the computing server 300 for real-time processing.

Referring to Fig. 3, a flowchart of the software part of the robot monitor 100 is illustrated. This flowchart details the data processing modules operable by the CPU 107, including telemetry functions, object identification, and tracking. The software modules interact with the hardware modules described in Fig. 2 to ensure comprehensive monitoring and risk assessment for each robot's dedicated monitoring component.

A telemetry module 111 is responsible for processing real-time data collected from one or more sensors installed on each mobile robot, such as the cameras 101, laser scanners 102, motion sensors 103, inclination sensors 104, shock sensors 105, and goods handling sensors 106. This module captures critical parameters such as the speed of the robot, distances to obstacles, detection of people and other vehicles, inclination of the robot's movement, shocks experienced by the robot, and the process of picking up, transporting, and putting down goods.

A data preprocessing module 112 receives raw telemetry data from the telemetry module 111 and performs necessary preprocessing steps. These steps may include data normalization, noise reduction, and filtering to ensure the data is clean and suitable for further analysis. The preprocessing module 112 ensures that the data is in a consistent format and free from errors that could affect the accuracy of subsequent processing stages.

A data communication module 113 ensures the secure transmission of preprocessed data from the robot monitor 100 via the communication interface 108 to the computing server 300. This module encrypts the data to maintain confidentiality and integrity, preventing unauthorized access or data manipulation during transmission.

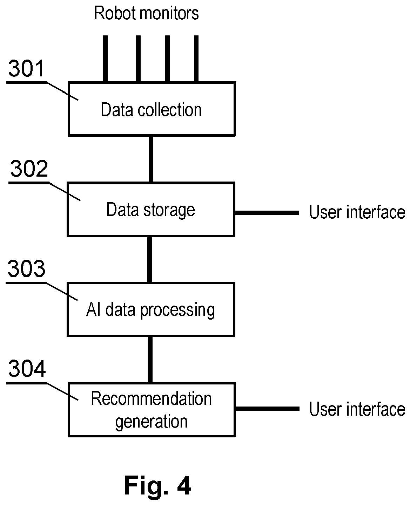

Referring to Fig. 4, a diagram of the computing server architecture 300 is illustrated. The computing server architecture is designed to support the continuous risk assessment system for mobile robots by providing a scalable and efficient platform for data management, analysis, and storage. The hardware components of the computing server are according to any standard server computer, either a standalone computer or a set of cloud computing and communication resources. The key functional components of the computing server architecture are explained below.

A data collection module 301 is responsible for receiving and aggregating data from various robot monitors 100. This module ensures that data from multiple sources is collected in real-time and stored in a centralized database. The data includes telemetry information, object identification and tracking data, and risk assessment results. The data collection module 301 also ensures the confidentiality and integrity of the data transmitted between the robot monitors 100 and the computing server 300 by handling access control mechanisms to ensure that information can be received only from authorized robot monitors 100.

A data storage module 302 provides a secure and scalable storage solution for the vast amounts of data generated by the robot monitors 100. This module utilizes cloud storage technologies to ensure that data is stored efficiently and can be accessed quickly for analysis. The storage system is designed to handle large datasets and support high availability and redundancy. The data storage module 302 further contains user-defined safety guidelines. A user may input specific safety guideline definitions or select from a predefined list of guidelines compliant with specific general guidelines or standards, such as EN/ISO 3691-4:2023.

An artificial intelligence (AI) data processing module 303 is responsible for analyzing the collected data using AI technology, including machine learning algorithms. This module processes the data to identify patterns, predict hazardous situations, and perform risk assessments. The data processing module 303 leverages cloud computing resources to perform complex computations and ensure real-time analysis. The AI data processing module 303 contains one or more AI models trained based on historical data to improve accuracy and adaptability. For example, the historical data may include expert-annotated trajectories of movement of robots which are considered correct, as well as incorrect in relation to specific guidelines. The AI models can be updated systematically based on the most recent data, which are input as data of correct operation in case no manual alerts were indicated during operation of the system and as data of incorrect operation in case a manual alert was input or an accident was detected. The trained AI models are therefore used to predict potential hazards and generate corresponding hazard information. Any known AI models can be used for this purpose, wherein the mechanisms of training and reasoning are known to persons skilled in the art. For example, one or more AI models can be trained to analyze the proximity of identified objects to each mobile robot, the speed and direction of movement, and other relevant factors to calculate the risk level. The risk assessment is based on the user-defined safety guidelines.

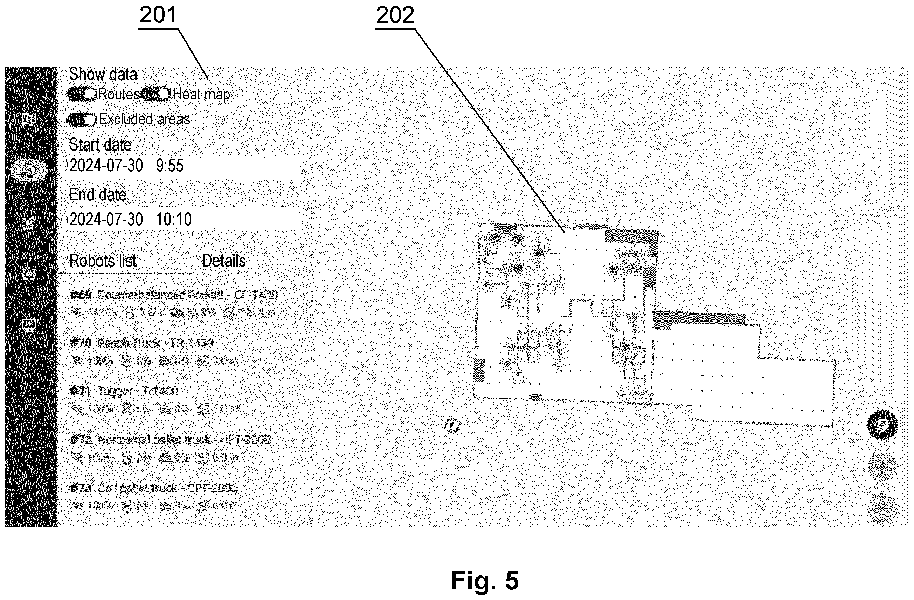

A recommendation generation module 304 uses the hazard information generated by the AI data processing module 303 to generate recommendations for safety measures. These recommendations are based on the current risk assessment and historical data. These recommendations may include introducing protection measures (such as barriers, horizontal/vertical markings, safety scanners installation, etc.) or change of procedures (such as reduction of speed of movement, altering movement paths), change of area types (such as operational, restricted, confined, load transfer, public areas). The module provides context-specific recommendations, such as reducing the robot's speed, altering its path, or stopping its movement to avoid potential hazards, as explained in more detail with respect to Fig. 5.

By integrating these components, the computing server 300 provides a robust and scalable platform. The architecture ensures that data is collected, stored, and analyzed efficiently, enabling real-time risk assessment and proactive safety management. The use of AI technology enhances the system's ability to predict hazardous situations and generate effective recommendations, ensuring a safe working environment for personnel and equipment.

Fig. 5 shows a sample graphical user interface (GUI) screen with recommendations generated by the computing server 300, for presentation to the user via the user interface module 200. The GUI screen contains a configuration panel 201 that allows selection of:
- whether to show routes traveled by the monitored robots,
- whether to show a heat map indicating the importance of detected problems,
- whether to show excluded areas where the robots should not be present,
- start and end date and time, determining the period for which the risk assessment is to be performed,
- robots that shall be included in the risk assessment analysis.

Once the selection is made, a map 202 of the monitored facility where the robots operate can be presented, with routes traveled by the monitored robots and problematic areas indicated as colored circles, with the color of the circle corresponding to the risk level assessed by the AI data processing module 303.

While the invention has been described with respect to a limited number of embodiments, it will be appreciated that many variations, modifications, and other applications of the invention may be made. Therefore, the claimed invention as recited in the claims that follow is not limited to the embodiments described herein.

## Claims

1. A continuous risk assessment system for mobile robots (10), the system comprising:
- at least one robot monitor (100), configured to monitor the environment of the mobile robot (10) and send sensor data representative of the robot's environment to a computing server (300), the robot monitor (100) comprising a central processing unit (107) configured to receive sensor data from at least one sensor (101-106) installed on the robot (10);
- the computing server (300), configured to collect and store sensor data received from the at least one robot monitor (100) and to perform the robot's operation risk assessment by means of an artificial intelligence (AI) data processing module (303) trained based on historical data of the robot's operation to generate hazard information relevant to safety guidelines;
- the user interface module (200) configured to provide a graphical user interface (GUI) for user interaction with the system, allowing input of the safety guidelines and presenting the hazard information.

2. The system according to claim 1, wherein the robot monitor (100) comprises at least: one or more cameras (101) for capturing visual data, one or more laser scanners (102) for measuring distances to obstacles, one or more motion sensors (103) for detecting movement and monitoring speed, one or more inclination sensors (104) for monitoring the angle of the slope, one or more shock sensors (105) for detecting vibrations and shocks, and one or more goods handling sensors (106) for monitoring the pick-up, transport, and put-down processes of goods.

3. The system according to any of the previous claims, wherein the robot monitor (100) comprises a telemetry module (111) for processing real-time sensor data from the sensors (101-106) and a data preprocessing module (112) configured to perform at least one of: normalizing, reducing noise, and filtering the real-time sensor data.

4. The system according to any of the previous claims, wherein the robot monitor (100) comprises a data communication module (113) configured to encrypt the sensor data to be transmitted to the computing server (300).

5. The system according to any of the previous claims, wherein the computing server (300) comprises a data collection module (301) for aggregating data from at least one robot monitor (100) and a data storage module (302) for storing the collected data.

6. The system according to any of the previous claims, wherein the computing server (300) further comprises a recommendation generation module (304) configured to generate recommendations for safety measures based on the hazard information generated by the AI data processing module (303).

7. A method for continuous risk assessment of mobile robots (10) by means of the system of any of the previous claims, the method comprising:
- monitoring the environment of at least one mobile robot (10) using the robot monitor (100) with hardware and software elements,
- collecting and storing monitoring data from the robot monitor (100) on the computing server (300),
- performing risk analysis by means of the AI data processing module (303) on the computing server (300) to generate hazard information,
- presenting the hazard information to the user via the user interface module (200).

8. The method according to claim 7, further comprising generating, by means of the recommendation generation module (304), recommendations for safety measures based on the hazard information.

9. The method according to claim 8, further comprising adapting the operation of the at least one mobile robot (10) based on the recommendations for safety measures.
